# EUROPEAN PATENT SPECIFICATION

(11) **EP 1 958 767 B1**
(45) Date of publication and mention of the grant of the patent: **23.05.2012**
(21) Application number: 08151062.0
(22) Date of filing: 05.02.2008
(51) Int. Cl.: E04C 2/296, B32B 37/10

(54) **Method for manufacturing a sandwich element and building element**
Verfahren zur Herstellung eines Sandwichelements und Bauteil
Méthode pour la fabrication d'un élément sandwich et élément de construction

(30) Priority: 06.02.2007 FI 20075085
(43) Date of publication of application: 20.08.2008
(73) Proprietor: Paroc Oy Ab, 00621 Helsinki (FI)
(72) Inventor: Willberg, Jim, 21600 Pargas (FI)
(74) Representative: LEITZINGER OY

(56) References cited:
- EP-A2- 1 258 343
- FR-A1- 2 205 439

## Description

The present invention relates to a method for manufacturing building elements of sandwich type comprising at least one material layer essentially consisting of insulating material, in which method the material layers of the sandwich element are fixed to each other by adhesion.

This invention further relates to a building element product essentially consisting of one or several building elements of sandwich type, wherein each building element comprises at least one material layer essentially consisting of insulating material.

In the present patent application by the terms "building element of sandwich type" and "sandwich element" is meant all kinds of elements consisting of different layers on top of each other, independently of the shape of the layers or the element. The terms "building element of sandwich type" and "sandwich element" especially comprises, on the one hand, such elements whose exterior shape consists of planar surfaces, such as for example sandwich panels, but on the other hand, also such elements whose exterior shape comprises at least one non-planar surface, such as bow-shaped elements.

By the term "adhesion" is in this application meant the attaching of elements to each other with the assistance of glue or other bonding agents between the elements or by the fact that the material of some of the elements as such has self-adhesive properties. These glues, binding agents or self-adhesive materials can be any conventional alternatives.

It is previously known that building elements of sandwich type with a core of insulating material, which essentially consists of mineral wool, are manufactured by gluing the outer material layers, such as sheet metal on both sides of the mineral wool core (a plate-like layer), to each other and thereafter pressing the material layers of the element against each other with a press until the glue has dried and achieved its adhesion effect. This known technique as such produces a good product but it has the following drawbacks:
- it is time-inefficient because the press is busy all the time until the compressing of the product is completed, i.e. when the glue has dried between the material layers
- the dimensions (the length and the width) of the product which is to be compressed are dependent on the dimensions of the press
- a planar press can not be used if the product which is to be compressed has a shape or at least a surface which is not planar (i.e. that surface/surfaces which are subjected to the compression)(for example sinus curve for e.g. corrugated sheet metal).

In order to make the above mentioned method more time-efficient there has been attempts in prior art to minimize costs of compression time by addition of heat during the compression or by using special fast-drying glues. These solutions however bring along extra electricity costs in the form of supplied heat energy as well as more expensive prices for special glues.

In case the exterior material layers of the sandwich element consist of materials with poor heat-transfer properties such as plywood, it is not even possible to use supply of heat energy for speeding up the drying of the glue since such materials insulate heat.

On the other hand, patent application FR2205439 discloses a method for manufacturing a building element of sandwich type comprising a core layer between two outer layers wherein the assembly of layers is placed inside a covering provided with a sealable aperture. The covering with enclosed layer assembly is itself placed inside a vacuum chamber which is connected to a vacuum source. By evacuating the vacuum chamber, the covering is also evacuated and its aperture is then sealed. Atmospheric pressure is then restored in the vacuum chamber thereby setting the layers inside the covering in a compressing state.

Our company has now come up with a way of solving the problems and drawbacks of prior art, namely the method of claim 1 and the building element of claim 5.

For this purpose a joining aid comprises at least a covering which is enclosable around one or more of the above said sandwich elements in a compressing state so that the material layers are compressed against each other in order to be attached.

In a preferable embodiment of the joining aid the compressing state is achieved by using devices for developing vacuum inside the covering. The insulating material is mineral wool in which a vacuum can be developed. Mineral wool contains air which can be sucked out of the material provided that the mineral wool is enclosed in a tight covering. The insulating material need not, however, necessarily be flexible, essential is that during developing of vacuum in the insulating material it is possible to get the enclosing material layers to be pressed against the insulating material over the whole surface in order to achieve the desired adhesion. Due to the fact that vacuum can be developed evenly throughout the whole of the insulating material it is possible to achieve a very even compression of material layers against the insulating material.

Above said devices for developing low pressure are preferably an air evacuating hole provided with a valve which is connectable to a vacuum pump or the like for developing vacuum inside the enclosing covering. The valve (or the valves) is preferably positioned at one of the lateral edges of that package which is obtained when one or more elements are enclosed by the covering so that the mouth of the valve is in suction contact with the insulating material, which is mineral wool. If there are several separate insulating material layers each material layer may be provided with at least one valve each. With suction contact is here meant that the valve either is in direct contact with the mineral wool or that it resides on a distance from the mineral wool but in such a manner that evacuated air during the evacuation freely may flow out of the mineral wool towards and out through the valve. The valve may for example be a back pressure valve. The mineral wool may be either glass or stone wool, preferably stone wool.

The covering preferably comprises a formable tightly enclosing material such as plastic film. On the inside of the covering and at least partially covered by it are preferably positioned lateral pieces and/or end pieces of an impermeable material (such as foamed plastic) against the lateral and/or terminal edges of the enclosed element or elements. Preferably at least one of at least the outer material layers is independently of each other selected amongst stiff materials such as metals, for example sheet metal, and materials with low heat-transfer properties, such as plywood. A sandwich element according to the invention may hence e.g. comprise of a slab-like mineral wool core between two plywood boards, one slab-like mineral wool core between one plywood board and one metal sheet, or one slab-like mineral wool core between two metal sheets. The material layers which are to be pressed against the insulating material need not however be stiff, compact or impermeable (to e.g. air, gas or liquid). One may also consider attaching more flexible material layers against the insulating material by the aid of this invention. Examples of flexible material layers are for instance films of different types such as aluminium foil.

The method according to the invention for manufacturing of building elements of sandwich type is in turn characterized in that one or more of said elements are enclosed inside a covering which is set in a compressing state so that the material layers are pressed against each other for adhesion.

The compressing state is preferably achieved by using vacuum for evacuating the air out of the covering. The element or elements can in practice, e.g. in a first step, be tightly enclosed by the covering in an essentially non-compressing state in order to thereafter, in a second step, by vacuum evacuation of air be set in a compressed state. The insulating material is mineral wool in which vacuum may be developed. The adhesion may for example be realized by applying glue between the material layers and/or due to the fact that at least some of the material layers show self-adhesive properties. In one preferable embodiment at least one of at least the outer material layers is independently of each other selected amongst stiff materials such as metals, e.g. metal sheet, and materials with low heat-transfer properties, such as plywood. In principle any other metals or kinds of wood may be used. In particular one may mention non-deformable materials such as plywood with low heat-transfer properties which can not take advantage of so called heat speeding, i.e. speeding of the drying process of the glue by supplying heat energy. As already has been said, the material layers which are to be pressed against the insulating material need not be stiff, they may also be flexible. The mineral wool may either be glass or stone wool, preferably stone wool. The mineral wool may contain conventional additives such as conventional binding agents. The mineral wool has preferably been cured before the joining and the compression according to the invention of the material layers of the sandwich element so that the fibres are bound to each other by the binder.

The building element product according to the invention is characterized in that the product consists of one or more of said sandwich elements packaged with the joining aid.

In this building element product the insulating material is mineral wool.

In the method according to the invention for manufacturing an insulating product of sandwich type one or more sandwich elements are enclosed inside the joining aid in order to thereafter be set in a compressing state.

In a preferable embodiment the compressing state is achieved by using vacuum for evacuating the air out of the covering.

The advantages of the above described invention are the following:
- reduction of costs for compression time by removing the compressing step from the manufacturing line
- it is also possible to compress elements which have a shape where at least one of the surfaces is non-planar such as for example bow-shaped elements
- elimination of costs for speeding up the drying of the glue with the aid of the heat
- no fast special glues are needed
- the compression is equally even all over
- the lengths of the products are unlimited since they no longer depend on the dimensions of the press
- the element may be moved immediately after proper magnitude of compression has been achieved (i.e. desired vacuum)
- the element is protected against humidity
- use of material with poor heat-transfer properties (such as plywood) is possible without supply of heat during the gluing.

In the following the invention is described in more detail by reference to the attached drawings wherein in
- Figure 1a: is presented as seen from the long side of the sandwich element how the material layers of the sandwich element are placed on top of each other on the underlaying joining aid,
- Figure 1b: is pictured the same step as in Figure 1a, but as seen from the short side of the element,
- Figure 2a: is pictured as seen from the long side of the sandwich element how end pieces are installed against the edges of the element,
- Figure 2b: is pictured as seen from the short side of the sandwich element how lateral pieces are installed against the long edges of the element,
- Figure 2c: is pictured an end piece and a lateral piece in perspective,
- Figure 2d: is pictured from above a sandwich element enclosed by end pieces and lateral pieces,
- Figure 3a: is pictured as seen from the long side, the sandwich element being enclosed by the joining aid in a non-compressing state,
- Figure 3b: is pictured as seen from the short side, the sandwich element being enclosed by the joining aid,
- Figure 4: is pictured as seen from the long side, the sandwich element enclosed by the joining aid in a compressing state and from the short side four elements enclosed by the joining aid in a compressing state.

### Example of joining aid and utilizing this in manufacturing of sandwich elements

In this specific example is described how a sandwich element comprising two plate-shaped soled material layers 1 and 3 as well as an intermediate layer 2 of insulating material can be manufactured by a joining aid according to the invention. In this specific example the surface layers 1 and 3 consist of two plywood boards of the same kind and a rock wool core 2 in slab format. The dimensions of the plywood boards and the mineral core layer may thanks to the invention in principle be of any sizes, but in this specific example the sandwich element 12 consists of a rock wool core 2 having a width of 1200 mm, a length of 12 m and a thickness of 80 mm and on both sides of this of a plywood board 1 and 3 having the same width dimensions and length dimensions as the rock wool core 2, but with the thickness of 5 mm.

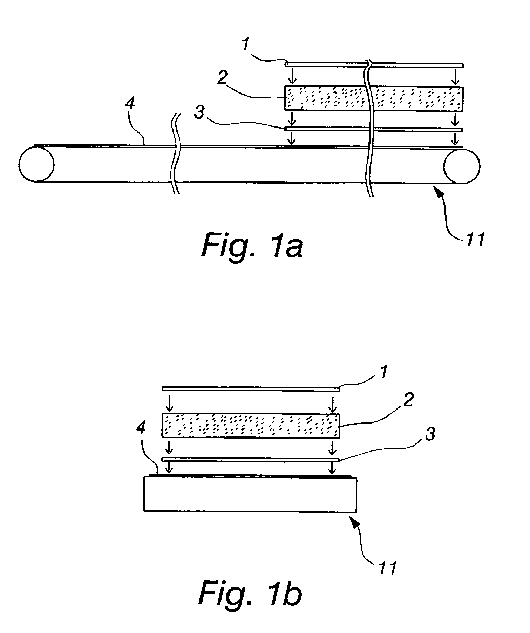

In Figure 1a is shown from the long side of a sandwich element how its material layers 1, 2 and 3 are placed on top of each other on the underlying joining aid 4 (illustrated by the vertical arrows between the material layers 1, 2, 3 and the joining aid 4) which in this example is a plastic film, which in turn has been laid upon a conveyor 11. The plastic film 4 has a length which is slightly longer than the circumference of the element in the direction of the length of the element. In Figure 1b is shown that the plastic film 4 is wider than the element. On the plastic film 4 is at first placed one of the plywood boards 3 with glue applied on the upper surface against which thereafter the rock wool core layer 2 is placed. On top of the rock wool core layer 2 is then placed the second plywood board 1 which has glue on its lower side, i.e. on that side which is to be placed against the rock wool core layer 2.

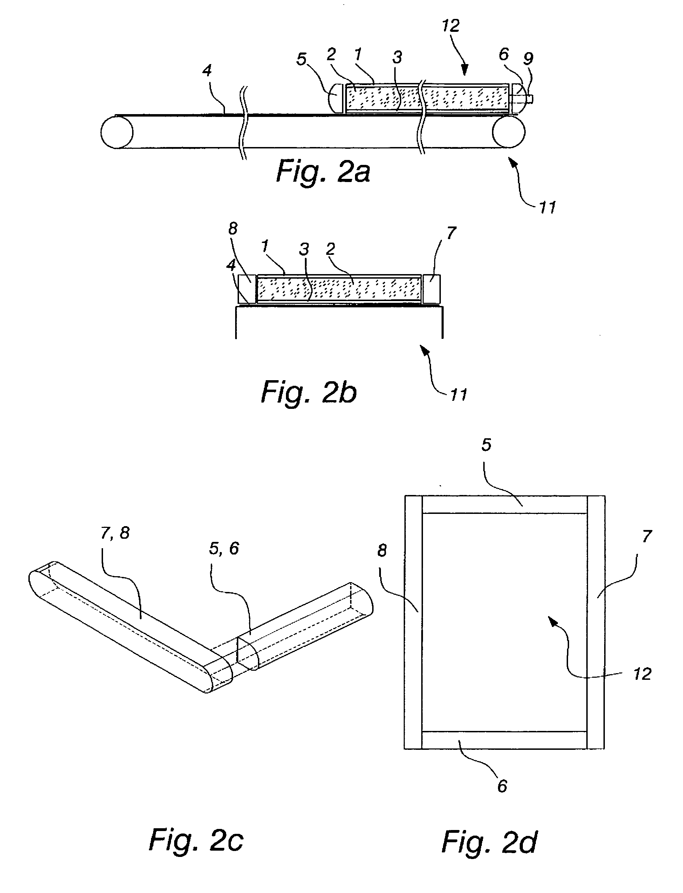

In Figure 2a and 2b is shown how the sandwich element 12 is provided with protecting end pieces (may also be called "end covers") 5, 6 and protective lateral pieces (may also be called "lateral covers") 7, 8 partly for making the edges of the enclosed element 12 less liable to fracturing or breaking and partly for reducing the risk of the enclosing plastic film 4 getting torn or cracking apart in the edge regions. The protective end pieces 5, 6 and lateral pieces 7, 8 are preferably made of some flexible but tight material such as foamed plastic and have a height which essentially corresponds to the thickness of the sandwich element 12.

In Figure 2c in presented an end piece 5 or 6 and a lateral piece 7 or 8 in perspective. In this Figure it is shown that the end pieces 5 and 6 are shaped in such a way that the cross sections of these have the shape of a rectangle whereof one of its sides has been rounded into a convex bow. The end pieces 5 and 6 are placed tightly against the short edges of the sandwich element 12 with the rounded side furthest outwards. In Figure 2c is also seen that the lateral pieces 7 and 8 in their turn essentially have a rectangular cross section. The lateral pieces 7 and 8 have a length corresponding to the sum of the length of the element 12 and the total thickness of the two end pieces 5 and 6. This is illustrated in Figure 2d where from above is shown an element 12 enclosed by two end pieces 5 and 6 and two lateral pieces 7 and 8. That length portion of the lateral pieces 7 and 8 which corresponds to the length of the element 12 is to its cross section rectangular, whereas those portions at both ends of the lateral pieces 7 and 8 which extend beyond the length of the element 12 have, as seen from the long side of the element 12, the same dimension and shape as the cross section of the end pieces 5 and 6.

In this specific example one of the end pieces 6 is provided with (alternatively both end pieces 5 and 6) with a back pressure valve 9 (which as generally seen is an air evacuation opening) which extends through the end piece 6 so that it is in suction contact with the mineral wool 2 and that it is connectable to a vacuum pump or the like (not shown in the Figure) for evacuation of air out of the mineral wool layer 2. In Figure 2b is shown that the plastic film 4 extends beyond the lateral edges of the element 12, i.e. beyond its width to an extent sufficient for it to lie beneath at least a part of the straight lower surfaces of the lateral pieces 7 and 8.

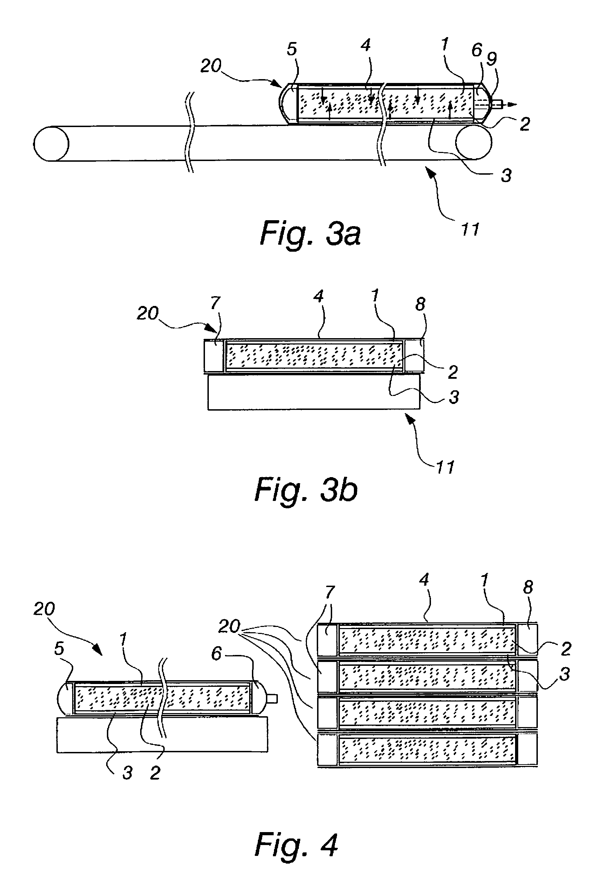

In Figure 3a and 3b is shown as seen from the long side and the short end, respectively, the sandwich element 12 enclosed by the covering 4 and the end pieces 5 and 6 as well as the lateral pieces 7 and 8. The enclosed sandwich element 12 is obtained by folding over the free end (see Figure 2a) of the plastic film 4 over the upper plywood board 1 of the element so that this is completely covered by the plastic film 4. Thereby the longitudinal overlaying edges of the plastic film 4 will along the whole of the circumference of the lateral pieces 7 and 8 to cover the lower and upper surfaces and the rounded edges of these so that the outer vertical surfaces of the lateral pieces will remain uncovered whereas the inner vertical surfaces in their turn will be tightly set against the lateral edges of the element 12. For the purpose of the plastic film 4 to be held in its position on the upper side of the element 12 before vacuum is achieved, for example flat steels or similar means may be placed as weights on top of the plastic film on top of the lateral pieces 7 and 8. As an alternative one may also consider using plastic with glue on the edges or tape for attaching the plastic film 4 to the lateral pieces 7 and 8.

Since both the plastic film 4 and the lateral pieces 7 and 8 are tight, a vacuum is obtained inside the plastic film 4 and the lateral pieces 7 and 8 by evacuating air out of the mineral wool 2 through a valve 9. This low pressure presses the plywood boards 1 and 3 towards each other against the intermediate rock wool core layer 2. The evacuation of air is illustrated in Figure 3a, where the horizontal dashed arrow represents the air which is sucked out of the mineral wool 2 through the valve 9, which is in suction contact with the mineral wool. The vertical upwardly and downwardly directed arrows with continuous lines inside the covering 4 illustrate how the upper and the lower plywood board 1 and 3 are pressed in a direction towards each other against the mineral wool 2, whereby this is slightly compressed due to its flexibility. When the desired vacuum has been achieved inside the building element product 20 the evacuation of air is stopped and the product can be moved from the production line to storage facilities or be put on transportation. The main issue is that the desired vacuum is maintained at least for as long as it takes for the glue to dry, thereafter the covering 4 may be opened or the vacuum of the product 20 removed. As long as there is a desired vacuum in the product the covering 4 thereof will serve as a press, humidity protection, and a transportation/storage protection at the same time. Hence the vacuum need not be removed e.g. until on the installation site whereby a maximum possible protection against humidity is obtained. Removal of the vacuum is achieved by opening the valve 9.

The enclosable covering 4 may also be a sealable readymade sack of tight material with desired dimensions. Even in such a case protective end pieces 5 and 6 as well as protective lateral pieces 7 and 8 may be used.

In Figure 4 is shown to the left a building element product comprising a sandwich element enclosed by a covering 4 which has been set in a compressing state by evacuation of air of the rock wool. After that the desired vacuum has been achieved the evacuation is stopped and the elements may for example be stored on top of each other in a storage in a manner such as that to the right in Figure 4 (the elements are seen from their short side).

The above described example describes a possible embodiment of the invention and shall not therefore be interpreted as a limitation of the scope of the protection requested in the enclosed claims.

## Claims

1. Method for manufacturing building elements (12) of sandwich type comprising at least one material layer (2) essentially consisting of mineral wool, in which method the material layers (1, 2, 3) of the sandwich element are fixed to each other by adhesion, wherein one or more of said elements (12) are enclosed inside a covering (4) provided with at least one valve (9), which is (are) set in suction contact with the mineral wool and is (are) connected to a vacuum pump or the like for developing vacuum inside the enclosing covering (4) by evacuating the air from the covering (4), which thereby is set in a compressing state so that the material layers (1, 2, 3) are pressed against each other for the purpose of adhesion.

2. Method according to claims 1, wherein the adhesion is realized by applying glue between the material layers (1, 2, 3) and/or due to the fact that at least some of the material layers (1, 2, 3) have self-adhesive properties.

3. Method according to claim 1 or 2, wherein at least one of at least the outer material layers (1, 3) independently of each other are selected from stiff materials such as metals, for example sheet metal, and materials with low heat-transfer properties such as plywood.

4. Method according to any one of the claims 1 to 3, **characterized in, that** the covering (24) is constituted by a formable tightly enclosing material such as plastic film.

5. Building element product (20) essentially consisting of one or several building elements (12) of sandwich type, where each building element comprises at least one material layer (2) essentially consisting of mineral wool, wherein the product (20) consists of one or more of said sandwich elements enclosed inside a covering (4) provided with at least one valve (9), which is (are) in suction contact with the mineral wool and is (are) connectable to a vacuum pump or the like for developing vacuum inside the enclosing covering (4) by evacuating the air from the covering (4), which thereby is set in a compressing state so that the material layers (1, 2, 3) are pressed against each other for the purpose of adhesion.

6. Building element product according to claim 5, **characterized in, that** the covering (24) is constituted by a formable tightly enclosing material such as plastic film.

## Patentansprüche

1. Verfahren zur Herstellung von Bauelementen (12) des Sandwichtyps, mindestens eine Materialschicht (2) umfassend, die im Wesentlichen aus Mineralwolle besteht, wobei in dem Verfahren die Materialschichten (1, 2, 3) des Sandwichelements durch Anhaften aneinander befestigt werden, wobei eines oder mehrere der Elemente (12) in einer Hülle (4) eingeschlossen ist/sind, die mit mindestens einem Ventil (9) ausgestattet ist, das (die) in Saugkontakt mit der Mineralwolle steht (stehen) und mit einer Unterdruckpumpe oder dergleichen verbunden ist (sind), um im Inneren der einschließenden Hülle (4) einen Unterdruck aufzubauen, indem die Luft aus der Hülle (4) gepumpt wird, die **dadurch** derart in einen komprimierten Zustand versetzt wird, dass die Materialschichten (1, 2, 3) zum Zweck des Anhaftens aneinander gepresst werden.

2. Verfahren nach Anspruch 1, wobei das Anhaften durch Aufbringen von Klebstoff zwischen den Materialschichten (1, 2, 3) erfolgt und/oder aufgrund der Tatsache, dass mindestens einige der Materialschichten (1, 2, 3) selbsthaftende Eigenschaften aufweisen.

3. Verfahren nach Anspruch 1 oder 2, wobei mindestens eine mindestens der äußeren Materialschichten (1, 3) unabhängig voneinander aus steifen Materialien wie Metallen, zum Beispiel Blech, und Materialien mit schlechten Wärmeleiteigenschaften, wie beispielsweise Sperrholz, ausgewählt wird.

4. Verfahren nach einem der Ansprüche 1 bis 3, **dadurch gekennzeichnet, dass** die Hülle (4) aus einem formbaren, eng umschließenden Material, wie beispielsweise Kunststofffolie, gebildet wird.

5. Bauelementprodukt (20), im Wesentlichen aus einem oder mehreren Bauelementen (12) des Sandwichtyps bestehend, wobei jedes Bauelement mindestens eine Materialschicht (2) umfasst, die im Wesentlichen aus Mineralwolle besteht, wobei das Produkt (20) aus einem oder mehreren Sandwichelementen besteht, die in einer Hülle (4) eingeschlossen sind, die mit mindestens einem Ventil (9) ausgestattet ist, das (die) in Saugkontakt mit der Mineralwolle steht (stehen) und mit einer Unterdruckpumpe oder dergleichen verbunden werden kann (können), um im Inneren der einschließenden Hülle (4) einen Unterdruck aufzubauen, indem die Luft aus der Hülle (4) gepumpt wird, die **dadurch** derart in einen komprimierten Zustand versetzt wird, dass die Materialschichten (1, 2, 3) zum Zweck des Anhaftens aneinander gepresst werden.

6. Bauelementprodukt nach Anspruch 5, **dadurch gekennzeichnet, dass** die Hülle (4) aus einem formbaren, eng umschließenden Material, wie beispielsweise Kunststofffolie, gebildet ist.

## Revendications

1. Procédé de fabrication d'éléments de construction (12) de type sandwich, comportant au moins une couche de matériau (2) composée essentiellement de laine minérale, procédé dans lequel les couches de matériau (1, 2, 3) de l'élément sandwich sont fixées les unes aux autres par adhérence, un ou plusieurs desdits éléments (12) étant enclos dans un recouvrement (4) pourvu d'au moins une soupape (9) qui est(sont) mise(s) en contact d'aspiration avec la laine minérale et est(sont) connectée(s) à une pompe à vide ou similaire pour créer du vide dans le recouvrement d'enveloppement (4) en évacuant l'air du recouvrement (4) qui est ainsi mis en état de compression afin que les couches de matériau (1, 2, 3) soient comprimées les unes contre les autres aux fins d'adhérence.

2. Procédé selon la revendication 1, dans lequel l'adhérence est obtenue en appliquant de la colle entre les couches de matériau (1, 2, 3) et/ou du fait qu'au moins certaines des couches de matériau (1, 2, 3) ont des propriétés autoadhésives.

3. Procédé selon la revendication 1 ou 2, dans lequel au moins une des couches extérieures de matériau (1, 3) est sélectionnée indépendamment des autres parmi des matériaux rigides comme des métaux, par exemple du feuillard métallique, et des matériaux ayant de faibles propriétés de transfert thermique comme du contre-plaqué.

4. Procédé selon l'une quelconque des revendications 1 à 3, **caractérisé en ce que** le recouvrement (4) est constitué d'un matériau malléable enveloppant étroitement comme du film plastique.

5. Produit élément de construction (20) consistant essentiellement en un ou plusieurs éléments de construction (12) de type sandwich, dans lequel chaque élément de construction comprend au moins une couche de matériau (2) composée essentiellement de laine minérale, ce produit (20) consistant en un ou plusieurs éléments sandwichs enclos dans un recouvrement (4) pourvu d'au moins une soupape (9) qui est(sont) mise(s) en contact d'aspiration avec la laine minérale et est(sont) connectable(s) à une pompe à vide ou similaire pour créer du vide dans le recouvrement d'enveloppement (4) en évacuant l'air du recouvrement (4) qui est ainsi mis en état de compression afin que les couches de matériau (1, 2, 3) soient comprimées les unes contre les autres aux fins d'adhérence.

6. Produit élément de construction selon la revendication 5, **caractérisé en ce que** le recouvrement (4) est constitué d'un matériau malléable enveloppant étroitement comme du film plastique.
